(19) Europäisches Patentamt

European Patent Office

Office européen des brevets

(11) Veröffentlichungsnummer: **0 120 378**
**B1**

(12) **EUROPÄISCHE PATENTSCHRIFT**

(45) Veröffentlichungstag der Patentschrift:
25.01.89

(21) Anmeldenummer: **84102597.6**

(22) Anmeldetag: **09.03.84**

(51) Int. Cl.⁴: **G 21 C 3/62,** F 27 B 9/08

(54) **Verfahren und Tunnelofen zum Sintern von Grünlingen.**

(30) Priorität: **24.03.83 DE 3310789**

(43) Veröffentlichungstag der Anmeldung:
**03.10.84 Patentblatt 84/40**

(45) Bekanntmachung des Hinweises auf die Patenterteilung:
**25.01.89 Patentblatt 89/4**

(84) Benannte Vertragsstaaten:
**BE DE FR GB IT SE**

(56) Entgegenhaltungen:
**FR-A-2 190 255**
**FR-A-2 293 681**

(73) Patentinhaber: **Siemens Aktiengesellschaft Berlin
und München, Wittelsbacherplatz 2, D-8000
München 2 (DE)**

(72) Erfinder: **Assmann, Helmut, Dr.,
Schwabachstrasse 13, D-8524 Dormitz (DE)**
Erfinder: **Maier, Georg, An der Bieg 15, D-8522
Herzogenaurach (DE)**
Erfinder: **Dörr, Wolfgang, Dr., von- Weber- Strasse
51a, D-8522 Herzogenaurach (DE)**
Erfinder: **Peehs, Martin, Dr., Falkenstrasse 3,
D-8521 Bubenreuth (DE)**

**Beschreibung**

Die Erfindung betrifft ein Verfahren zum Sintern von Grünlingen zu Brennstofftabletten, bei dem die Grünlinge durch die Muffel eines Tunnelofens bewegt werden. Zum Transport der Grünlinge durch die Muffel des Tunnelofens hat man bisher Transportschiffchen verwendet, auf denen eine große Anzahl von Grünlingen neben- und übereinander aufgeschichtet wurde.

Wegen dieser Stapelung der Grünlinge ist zwangsläufig der Temperaturverlauf und die Beaufschlagung mit den Gasen nicht für jeden Grünling identisch, mit der Folge, daß die Standardabweichung der Kenndaten - insbesondere der Abmessungen und der Dichte - der gesinterten Brennstofftabletten so groß ist, daß die Tabletten nach dem Sintern vermessen und zum Teil nachbehandelt - geschliffen - werden müssen.

Das bekannte Verfahren setzt ferner einen entsprechend großen Querschnitt der Muffel voraus, was einen entsprechend großen Material- und Energieaufwand bedeutet; letzterer ist zusätzlich durch das Aufheizen der Transportschiffchen erhöht.

Ein weiterer Nachteil des bekannten Verfahrens besteht darin, daß die Notwendigkeit einer Veränderung der Prozeßparameter - insbesondere der Verweildauer der Grünlinge, des Temperaturprofils und des Sauerstoffpartialdruckes - erst feststellbar ist, wenn ein Transportschiffchen entladen und die Brennstofftabletten vermessen sind; in der Zwischenzeit läuft aber der fehlerhaft eingestellte Prozeß weiter und produziert Ausschuß.

Schließlich ist der Kombinationsspielraum für Prozeßparameter bei dem bekannten Verfahren sehr gering, da er durch die Materialeigenschaften der Transportschiffchen begrenzt ist, die denselben Prozeßparametern wie die Grünlinge ausgesetzt sind.

So mußte beispielsweise die Temperatur bei dem aus der DE-C-2 855 166 bekannten Niedrigtemperatur-Kurzzeit-Sintern auf 1150°C begrenzt werden, da es kein Material für die Transportschiffchen gibt, das oberhalb dieser Temperatur in oxidierender und reduzierender Atmosphäre eingesetzt werden könnte.

Auch ein oxidativ-reduzierendes Sintern nach DE-C-2 939 415 ist bisher großtechnisch nicht wirtschaftlich realisierbar, da hierzu die Transportschiffchen Temperaturen bis 1550°C bei unterschiedlicher Sauerstoffaktivität aushalten müßten.

Der Erfindung liegt daher die Aufgabe zugrunde, ein Verfahren und einen Tunnelofen zum Sintern von Grünlingen anzugeben, bei dem die aufgezählten Nachteile nicht zu verzeichnen sind; insbesondere soll die Standardabweichung der Kenndaten der gesinterten Brennstofftabletten sowie der Material- und Energieaufwand wesentlich reduziert und die Möglichkeit geschaffen werden, die Prozeßparameter zu optimieren.

Die erfindungsgemäße Lösung dieser Aufgabe ist bei einem Verfahren der eingangs genannten Art dadurch gekennzeichnet, daß die Grünlinge auf einer die Muffel durchsetzenden, wenigstens eingangsseitig aus ihr herausragenden Führungseinrichtung in Form einer einlagigen Säule aus aneinanderstoßenden Grünlingen durch die Muffel geschoben werden.

Die Erfindung arbeitet somit ohne Transportschiffchen: Infolge dessen durchläuft jeder einzelne Grünling bei konstanten Prozeßparametern dasselbe Temperaturprofil und dieselbe Atmosphäre, wodurch sich die Standardabweichung der Kenndaten der Brennstofftabletten im Vergleich zu dem bisher angewandten Verfahren mehr als halbiert.

In Verbindung mit dem kontinuierlichen Durchlauf der Grünlinge ermöglicht dies, die Prozeßparameter so zu steuern, daß die Kenndaten der fertig gesinterten Brennstofftabletten in einem so engen Sollwertbereich liegen, daß die Tabletten ohne weitere Nachbehandlung, also insbesondere ohne Schleifen, weiterverarbeitet werden können. Hierzu wird vorzugsweise die Länge der Grünlinge in einem ausreichenden Abstand vor der Austrittsöffnung der Muffel - z. B. mit einem an sich bekannten optischen Verfahren - ermittelt und davon abhängig einer der Prozeßparameter - Durchlaufgeschwindigkeit, Temperaturprofil, Sauerstoffpartialdruck etc. - verändert. Das Ausmaß dieser Veränderung wird dabei durch eine empirisch ermittelte Kennlinie vorgegeben, die zu jeder Länge den zugehörigen Wert des Prozeßparameters angibt. Eine solche Kurve ist selbstverständlich immer nur für Grünlinge mit denselben Eingangskenndaten (Zusammensetzung, Dichte, Abmessungen) gültig.

Da die Erfindung ohne Transportschiffchen arbeitet, entfällt nicht nur der sonst dafür nötige Aufwand an teurem Material, sondern auch das Auf- und Entladen der Schiffchen, sowie ihr Aufheizen und Abkühlen.

Der Wegfall der Transportschiffchen und die einlagige Anordnung der Grünlinge ermöglicht es ferner, eine Muffel mit wesentlich geringerer Bauhöhe zu verwenden, was einen entsprechend niedrigen Material- und Energieaufwand bedeutet. Als Konsequenz der geringen Höhe der Muffel ist auch der freie Querschnitt zwischen den einzelnen Grünlingen entsprechend klein, sodaß sich die Gasatmosphäre in der Muffel - such abschnittsweise - sehr genau einstellen und konstant halten läßt. Hierzu kann wenigstens ein Teil der Tragstäbe als hohle Tragrohre ausgebildet sein, die an unterschiedlichen Stellen ihrer Länge je eine Durchtrittsöffnung aufweisen: Auf diesem Wege kann dann die Gaszusammensetzung an verschiedenen Orten in der Muffel gemessen und/oder - durch Einblasen eines Gases - geändert werden. Ferner lassen sich in den Tragrohren Temperaturfühler verschiebbar anordnen, sodaß auch das Temperaturprofil in der Muffel in einfacher Weise gemessen werden kann.

Die Erfindung ist besonders geeignet zum Niedrigtemperatur-Kurzzeit-Sintern nach DE-C-2 855 166, wobei es jetzt möglich ist, mit einer Sintertemperatur von 1300°C zu arbeiten. Die Erfindung ermöglicht dabei eine besonders einfache und wirksame Bauform einer Gasschleuse zur Trennung der Sinterzone von der Reduktionszone. Das optimale Längenverhältnis dieser Zonen zueinander bei gegebener Länge der Muffel läßt sich dabei einfach durch Verschieben der Gasschleuse einstellen.

Aus der FR-A-2 190 255 ist an sich ein Tunnelofen mit einer Muffel bekannt, wobei keramische Produkte, insbesondere Fliesen, aneinanderstoßend durch die Muffel geführt werden.

Ein Ausführungsbeispiel der Erfindung wird anhand der Figuren näher erläutert; es zeigen

FIG 1     einen schematischen Längsschnitt durch einen Sinterofen, wobei Heizeinrichtungen weggelassen sind,

FIG 2     eine Ansicht des Sinterofens in Richtung des Pfeiles R in FIG 1, wobei das Abschlußstück weggelassen ist,

FIG 3     eine perspektivische Ansicht der Muffel in Richtung des Pfeiles III in FIG 1, in vergrößerter Darstellung ohne Abschlußstück und

FIG 4     einen perspektivischen Längsschnitt durch die Gasschleuse in vergrößerter Darstellung.

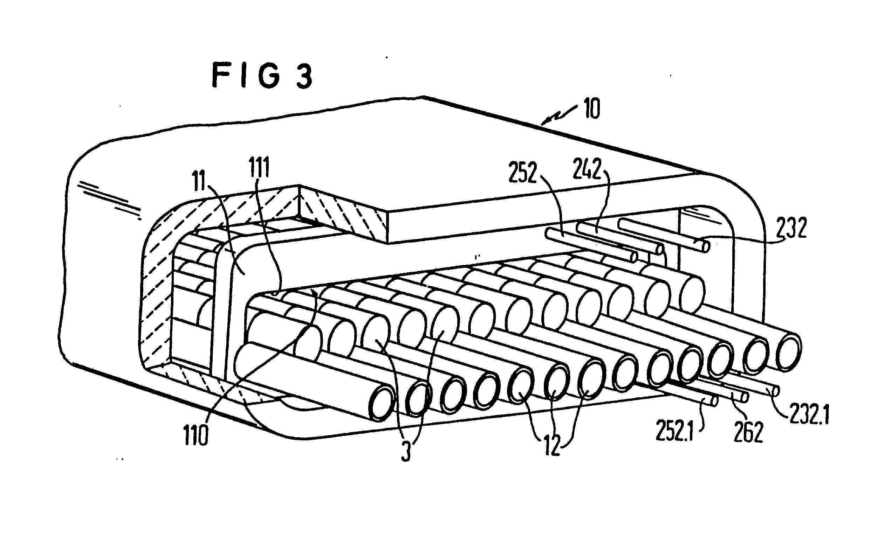

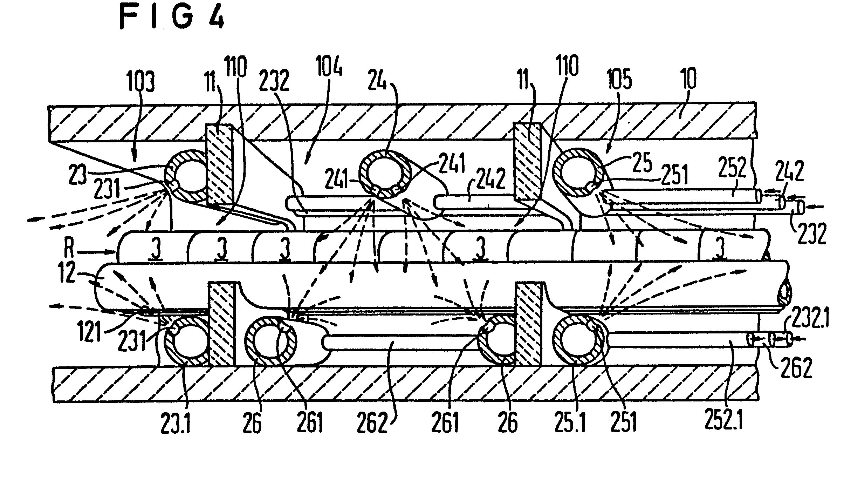

Der Tunnelofen 1 ist von einer Muffel 10 aus $AL_2O_3$ mit im wesentlichen rechteckigem Querschnitt durchsetzt, die beidseitig aus dem Tunnelofen herausragt und dort von zwei Abschlußstücken 112, 113 abgedeckt ist. In der Muffel 10 sind im Abstand voneinander Trennwände 11 aus temperaturbeständigem Material ($AL_2O_3$) und entsprechende Trennwände 11.1 und 11.2 in den Abschlußstücken 112, 113 angeordnet; diese Trennwände haben eine ebenfalls etwa rechteckige Durchtrittsöffnung 110 (FIG 3, 4), auf deren Unterkante, nebeneinander und parallel, gerade Tragrohre 12 - ebenfalls aus $AL_2O_3$ - gelagert sind, die stationär etwas aus der Muffel 10 und ihren Abschlußstücken 112, 113 herausragen: Damit ist der Anschluß an Beschickungs- bzw. Kühleinrichtungen einfach möglich.

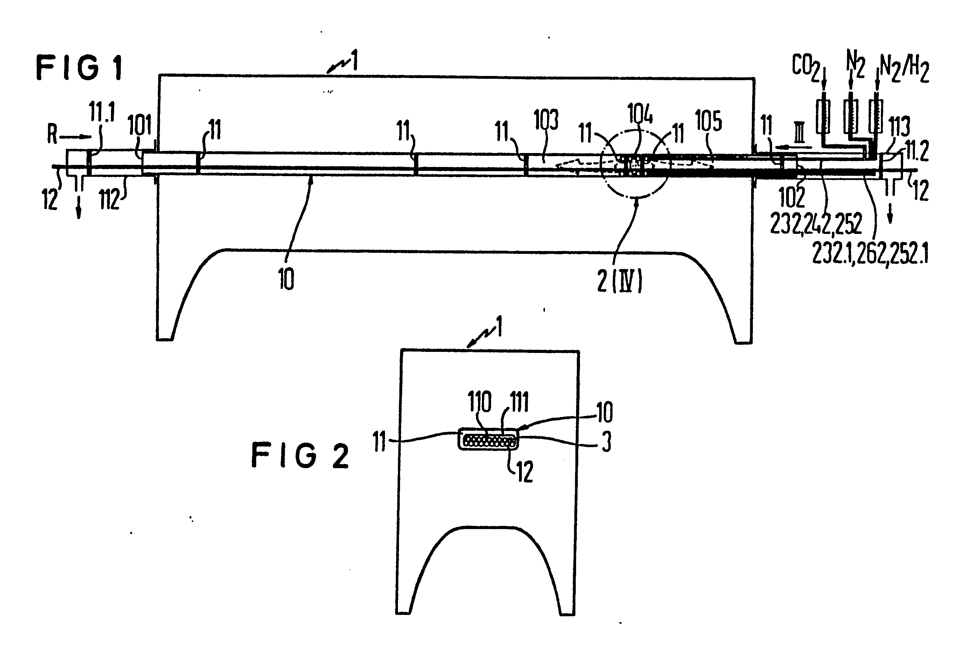

Zwischen je zwei Tragrohren 12 ist eine einlagige Säule aus aneinanderstoßenden Grünlingen 3 gelagert; diese Säulen werden gleichzeitig durch eine nicht dargestellte Beschickungsvorrichtung in Richtung des Pfeiles R in FIG 1 stetig durch die Muffel gedrückt. Wegen der glatten Oberflächen der Grünlinge und der Tragschienen ist die dazu notwendige Druckkraft selbst bei einem Ofen von 3 m Länge mit 1,5 Kp recht klein. Bei Öfen größerer Länge kann die erforderliche Druckkraft durch eine entsprechende Neigung der Muffel und der Tragschienen reduziert werden.

Auf jeden Fall läßt sich der Druck so niedrig halten, daß die Grünlinge, die sich ja stirnseitig nur in einer Kreisringfläche berühren, weder zusammenbacken noch zerdrückt werden.

Die Durchtrittsöffnung 110 (FIG 3, 4) in den Trennwänden 11 ist so geformt und bemessen, daß der kleinste Abstand zwischen einem auf den Tragstäben gelagerten Grünling und den jeweils benachbarten Kanten 111 der Durchtrittsöffnung kleiner als das Ein- bis Zweifache des Durchmessers eines Grünlings 3 ist: Damit ist der für eine Gasströmung freie Querschnitt außerordentlich gering.

In der Muffel 10 ist eine Gasschleuse 2 - vergrößert in FIG 4 dargestellt - angeordnet, die die Muffel in eine Sinterzone 103 und eine Reduktionszone 105 teilt. Sie weist hierzu zwei in geringem Abstand voneinander angeordnete Trennwände 11 auf, die zwischen sich eine Entkopplungszone 104 einschließen, die von oben nach unten von einem Spülgas - z. B. Stickstoff - durchströmt ist. Hierzu ist in ihrem oberen Bereich ein Verteilerrohr 24 mit Einblasöffnungen 241 quer zur Muffelachse angeordnet und an ein Zuführungsrohr 242 angeschlossen. Unterhalb der Tragrohre 12 sind zwei Abgaßsammler 26 mit Absaugöffnungen 261 - ebenfalls quer zur Muffel - angeordnet und an ein Absaugrohr 262 angeschlossen: Das durch das Verteilerrohr 24 in die Entkopplungszone 104 eingeblasene Spülgas wird somit von den Abgassammlern 26 wieder abgesaugt, wie dies durch die Strömungspfeile angedeutet ist. Dabei wird eventuell aus der Reduktionszone 105 oder aus der Oxidationszone 103 in die Entkopplungszone eintretendes Gas mitgerissen, so daß Sinter- und Reduktionszone praktisth vollständig entkoppelt sind.

Auf der Außenseite der der Eintrittsöffnung 101 der Muffel 10 zugewandten Trennwand 11 der Gasschleuse sind oberhalb und unterhalb der Tragrohre 12 Verteilerrohre 23, 23.1 mit Einblasöffnungen 231 angeordnet, die an Zuführungsrohre 232, 232.1 angeschlossen sind, über die ein oxidierendes Gas, z. B. $CO_2$, zugeführt wird. Dieses Gas wird durch die Einblasöffnungen 231 schräg gegen die Eintrittsöffnung 101 der Muffel in diese eingeblasen und über das Abschlußstück 112 abgesaugt. Das Gas strömt somit entgegen der Vorschubrichtung R der Grünlinge durch die Durchtrittsöffnungen 110 der Trennwände 11, sodaß keine unerwünschten Luftbestandteile durch die Eintrittsöffnung 101 bis zu der eigentlichen Sinterzone vor der Gasschleuse 2 vordringen können; gegebenenfalls sind entsprechend viele Trennwände in kleinerem Abstand voneinander in der Muffel anzuordnen.

Auf der der Austrittsöffnung 102 der Muffel zugewandten Seite der Trennwand 11 der Gasschleuse 2 sind oberhalb und unterhalb der Tragrohre 12 Verteilerrohre 25, 25.1 mit Einblasöffnungen 251 angeordnet, die an Zuführungsrohre 252, 252.1 angeschlossen sind, über die ein reduzierend wirkendes Gasgemisch, z. B. 20 % Wasserstoff und 80 % Stickstoff, zugeführt wird. Dieses Gas wird - wie die Strömungspfeile zeigen - gegen die Austrittsöffnung 102 in die Muffel eingeblasen und über das Abschlußstück 113 abgesaugt.

Die Zuführungsrohre für die verschiedenen Gase und das Absaugrohr 262 sind in den Trennwänden 11 gehaltert und innerhalb der Muffel bis zu dem Abschlußstück 113 geführt: Auf diese Weise werden die Gase bei ihrer Zuführung in der Muffel 10 aufgeheizt.

Die beiden Trennwände 11 der Gasschleuse sind durch Zuführungs- und Absaugrohre mechanisch miteinander verbunden und verschiebbar in der Muffel 10 angeordnet: Die Lage der Gasschleuse 2 innerhalb der Muffel und damit das Verhältnis der Längen der Sinterzone 103 zur Reduktionszone 105 ist auf diese Weise einfach veränderbar und den jeweiligen Prozeßparametern anpaßbar.

Als Konsequenz der geringen Höhe der Muffel ist auch der freie Querschnitt zwischen den einzelnen Grünlingen entsprechend klein, sodaß sich die Gasatmosphäre in der Muffel - auch abschnittsweise - sehr genau einstellen und konstant halten läßt. Hierzu kann wenigstens ein Teil der Tragstäbe 12 als hohle Tragrohre ausgebildet sein, die an unterschiedlichen Stellen ihrer Länge je eine Durchtrittsöffnung 121 aufweisen: Auf diesem Wege kann dann die Gaszusammensetzung an verschiedenen Orten in der Muffel gemessen und/oder - durch Einblasen eines Gases - geändert werden. Ferner lassen sich in den Tragrohren Temperaturfühler verschiebbar anordnen, sodaß auch das Temperaturprofil in der Muffel in einfacher Weise gemessen werden kann.

**Bezugszeichenliste**

1 Tunnelofen
10 Muffel
101 Eintrittsöffnung
102 Austrittsöffnung
103 Sinterzone
104 Entkopplungszone
105 Reduktionszone
11, 11.1, 11.2 Trennwände
110 Durchtrittsöffnung
111 Kante
112, 113 Abschlußstück
12 Führungseinrichtung, Tragstab, Tragrohr
121 Durchtrittsöffnung
2 Gasschleuse
23, 23.1 Verteilerrohre
24 Verteilerrohr
25, 25.1 Verteilerrohre
26 Gassammler
231 Einblasöffnungen
241 ''
251 ''
261 Absaugöffnungen
232, 232.1 Zuführungsrohre

242 Zuführungsrohr
252, 252.1 Zuführungsrohre
262 Absaugrohr
3 Grünling

**Patentansprüche**

1. Verfahren zum Sintern von Grünlingen zu Brennstofftabletten, bei dem die Grünlinge (3) durch die Muffel (10) eines Tunnelofens (1) bewegt werden, dadurch gekennzeichnet, daß die Grünlinge (3) auf einer die Muffel (10) durchsetzenden, wenigstens eingangsseitig aus ihr herausragenden Führungseinrichtung (12) in Form einer einlagigen Säule aus aneinanderstoßenden Grünlingen (3) durch die Muffel (10) geschoben werden.

2. Verfahren nach Anspruch 1, dadurch gekennzeichnet, daß die Länge der Grünlinge im Abstand von der Austrittsöffnung (102) der Muffel (10) ermittelt und davon abhängig ein Prozeßparameter so gesteuert wird, daß die Kenndaten der fertig gesinterten Brennstofftabletten in einem vorgegebenen Sollwertbereich liegen, wobei der Zusammenhang zwischen Prozeßparameter und der Länge der Grünlinge durch eine für Grünlinge mit definierten Eingangskenndaten geltende, empirisch ermittelte Kennlinie gegeben ist.

3. Tunnelofen mit einer Muffel (10) zur Durchführung des Verfahrens nach Anspruch 1 oder 2, dadurch gekennzeichnet, daß in der Muffel (10) im Abstand voneinander mindestens zwei Trennwände (11) mit je einer Durchtrittsöffnung (110) angeordnet sind, daß die die Muffel (10) durchsetzende Führungseinrichtung für n Säulen von Grünlingen (3) n+1 prismatische Tragstäbe (12) sind, die parallel nebeneinander auf der Unterkante der Durchtrittsöffnung (110) der Trennwände (11) gelagert sind, und daß die Abmessungen der Durchtrittsöffnungen (110) so bemessen sind, daß der kleinste Abstand zwischen einem zwischen zwei Tragstäben (12) gelagerten Grünling (3) und benachbarten Kanten (111) der Durchtrittsöffnung (110) kleiner als das Ein- bis Zweifache des Durchmessers eines Grünlings (3) ist.

4. Tunnelofen nach Anspruch 3, dadurch gekennzeichnet, daß wenigstens ein Teil der Tragstäbe als hohle Tragrohre (12) ausgebildet ist.

5. Tunnelofen nach Anspruch 4, dadurch gekennzeichnet, daß wenigstens ein Teil der Tragrohre (12) eine Durchtrittsöffnung (121) zum Zuführen oder Absaugen von Gas aufweist.

6. Tunnelofen nach Anspruch 5, dadurch gekennzeichnet, daß die Durchtrittsöffnung (121) in den einzelnen Tragrohren unterschiedlichen Abstand von der Eintrittsöffnung (101) der Muffel (10) haben.

7. Tunnelofen nach Anspruch 4, dadurch gekennzeichnet, daß in einem der Tragrohre (12) ein Temperaturfühler verschiebbar angeordnet ist.

8. Tunnelofen nach einem der Ansprüche 3 bis 7 mit einer Sinterzone (103) mit oxidierendem Gas, einer Reduktionszone (105) mit einem reduzierendem Gas und einer dazwischen angeordneten Gasschleuse (2), die dadurch gekennzeichnet ist, daß zwei Trennwände (11) zwischen sich eine Entkopplungszone (104) einschließen, die quer zur Längsachse der Muffel (10) von einem Spülgas durchströmt wird, daß auf der Außenseite der der Eintrittsöffnung (101) der Muffel (10) zugewandten Trennwand (11) Verteilerrohre (23, 23.1) für das oxidierende Gas angeordnet sind, das durch Einblasöffnungen (231) gegen die Eintrittsöffnung (101) in die Muffel eingeblasen und in der Umgebung der Eintrittsöffnung abgesaugt wird, und daß auf der Außenseite der der Austrittsöffnung (102) der Muffel (10) zugewandten Trennwand Verteilerrohre (25, 25.1) für das reduzierende Gas angeordnet sind, das durch Einblasöffnungen (251) gegen die Austrittsöffnung (102) der Muffel (10) eingeblasen und in der Umgebung der Austrittsöffnung abgesaugt wird.

9. Tunnelofen nach Anspruch 8, dadurch gekennzeichnet, daß die Verteilerrohre (23 bis 25) an Zuführungsrohre (232 bis 252) für die Gase angeschlossen sind, die innerhalb der Muffel (10) verlaufen und durch die Trennwände (11) gehaltert sind.

10. Tunnelofen nach Anspruch 8 oder 9, dadurch gekennzeichnet, daß die Gasschleuse (2) in der Muffel (10) verschiebbar angeordnet ist.

**Claims**

1. Method of sintering green pellets to form fuel tablets, in which the green pellets (3) are moved through the muffle (10) of a tunnel furnace (1), characterized in that the green pellets (3) are pushed through the muffle (10) on a guide device (12) passing through the muffle (10) and projecting therefrom at least on the inlet side, in the form of a single-layer column consisting of abutting green pellets (3).

2. Method according to claim 1, characterized in that the length of the green pellets is determined in the space from the outlet opening (102) of the muffle (10) and, dependent on this, a process parameter is controlled in such a way that the characteristic data of the finished sintered fuel tablets lie in a specified desired value range, the connection between the process parameter and the length of the green pellets being given by an empirically determined characteristic curve applicable to green pellets with defined input characteristic data.

3. Tunnel furnace with a muffle (10) for carrying out the method according to claim 1 or 2, characterized in that at least two dividing walls (11), each having a through-opening (110), are arranged in the muffle (10) with a distance between them, in that the guide device passing through the muffle (10) for n columns of green pellets (3) consists of n + 1 prismatic carrying rods (12) which are mounted parallel to each other, side by side on the bottom edge of the through-opening (110) of the dividing walls (11), and in that the dimensions of the through-openings (110) are measured in such a way that the smallest distance between a green pellet (3), supported between two carrying rods (12), and adjoining edges (111) of the through-opening (110) is smaller than one to two times the diameter of one green pellet (3).

4. Tunnel furnace according to claim 3, characterized in that at least one portion of the carrying rods is formed as hollow carrying pipes (12).

5. Tunnel furnace according to claim 4, characterized in that at least one portion of the carrying pipes (12) has a through-opening (121) for the supply or drawing out of gas.

6. Tunnel furnace according to claim 5, characterized in that the through-openings (121) in the individual carrying pipes are at varying distances from the inlet opening (101) of the muffle (10).

7. Tunnel furnace according to claim 4, characterized in that in one of the carrying pipes (12) a temperature sensor is arranged so that it can be adjusted.

8. Tunnel furnace according to one of claims 3 to 7, having a sinter zone (103) with oxidizing gas, a reduction zone (105) with a reducing gas and a gas lock (2) arranged between them, which gas lock is characterized in that two dividing walls (11) enclose between themselves a decoupling zone (104) through which a purging gas passes transversely to the longitudinal axis of the muffle (10), in that on the outer side of the dividing wall (11), facing the inlet opening (101) of the muffle (10), distributor pipes (23, 23.1) are arranged for the oxidizing gas which is injected through injection openings (231) towards the inlet opening (101) into the muffle and is drawn out in the vicinity of the inlet opening, and in that on the outer side of the dividing wall, facing the outlet opening (102) of the muffle (10), distributor pipes (25, 25.1) are arranged for the reducing gas which is injected through injection openings (251) towards the outlet opening (102) of the muffle (10) and is drawn out in the vicinity of the outlet opening.

9. Tunnel furnace according to claim 8, characterized in that the distributor pipes (23 to 25) are connected to supply pipes (232 to 252) for the gases, which supply pipes extend within the muffle (10) and are supported by the dividing walls (11).

10. Tunnel furnace according to claim 8 or 9, characterized in that the gas lock (2) in the muffle (10) is arranged so that it can be adjusted.

## Revendications

1. Procédé de frittage d'ébauches vertes en pastilles de matière combustible, dans lequel les ébauches vertes (3) passent dans le moufle (10) d'un four-tunnel (1), caractérisé en ce qu'il consiste à pousser dans le moufle (10) les ébauches vertes (3), sous la forme d'une colonne en une seule couche, constituée d'ébauches vertes (3) contigües, sur un dispositif de guidage (12) traversant dans le moufle (10) et le débordant au moins du côté de l'entrée.

2. Procédé suivant la revendication 1, caractérisé en ce qu'il consiste à déterminer la longueur des ébauches vertes à distance de l'ouverture de sortie (102) du moufle (10) et à commander, en fonction de celle-ci un paramètre de processus de sorte que les données caractéristiques des pastilles de matière combustible frittées finies se trouvent dans une plage de valeurs de consigne prescrite, la relation entre le paramètre de processus et la longueur des ébauches vertes étant donnée par une caractéristique déterminée empiriquement et valable pour des ébauches vertes ayant des données caractéristiques à l'entrée, qui sont définies.

3. Four-tunnel comprenant un moufle (10) pour la mise en oeuvre du procédé suivant la revendication 1 ou 2, caractérisé en ce que dans le moufle (10) sont disposées, à une certaine distance l'une de l'autre, au moins deux cloisons de séparation (11) ayant chacune une ouverture de passage (110), en ce que les dispositifs de guidage de n colonnes d'ébauches vertes (3), qui passent dans le moufle (10), sont n + 1 barres de supports (12) prismatiques qui sont disposées parallèlement l'une à côté de l'autre sur le bord inférieur de l'ouverture de passage (110) des cloisons de séparation (11) et en ce que les dimensions des ouvertures de passage (110) sont telles que la distance la plus petite entre une ébauche verte (3) placée entre deux barres de supports (12) et les bords voisins (111) de l'ouverture de passage (110) est inférieure de une à deux fois le diamètre d'une ébauche verte (3).

4. Four-tunnel suivant la revendication 3, caractérisé en ce qu'au moins une partie des barres de supports est constituée sous la forme de tubes-supports (12) creux.

5. Four-tunnel suivant la revendication 4, caractérisé en ce qu'au moins une partie des tubes-supports (12) comporte une ouverture de passage (121) pour amener du gaz ou pour en aspirer.

6. Four-tunnel suivant la revendication 5, caractérisé en ce que les ouvertures de passage (121) des tubes-supports individuels sont à des distances différentes de l'ouverture d'entrée (101) du moufle (10).

7. Four-tunnel suivant la revendication 4, caractérisé en ce qu'une sonde de température est montée coulissante dans l'un des tubes-supports (12).

8. Four-tunnel suivant l'une des revendications 3 à 7, comprenant une zone de frittage (103) par du gaz oxydant, une zone de réduction (105) par un gaz réducteur et un sas à gaz (2) disposé entre ces zones, caractérisé en ce que deux cloisons de séparation (11) enferment entre elles une zone de découplage (104), dans laquelle un gaz de balayage passe transversalement à l'axe longitudinal du moufle (10), en ce que, du côté extérieur de la cloison de séparation (11), tourné vers l'ouverture d'entrée (101) du moufle (10), sont disposés des tubes-répartiteurs (23, 23.1) du gaz oxydant qui est insufflé dans le moufle vers l'ouverture d'entrée (101) par des orifices d'insufflation (231) et qui est aspiré à proximité de l'ouverture d'entrée et en ce que, du côté extérieur de la cloison de séparation tourné vers l'ouverture de sortie (102) du moufle (10), sont montés des tubes-répartiteurs (25, 25.1) du gaz réducteur qui est insufflé vers l'ouverture de sortie (102) du moufle (10) par des orifices d'insufflation (251) et qui est aspiré à proximité de l'ouverture de sortie.

9. Four-tunnel suivant la revendication 8, caractérisé en ce que les tubes-répartiteurs (23 à 25) sont raccordés à des tubes d'amende (232 à 252) des gaz qui s'étendent dans le moufle (10) et qui sont maintenus par les cloisons de séparation (11).

10. Four-tunnel suivant la revendication 8 ou 9, caractérisé en ce que le sas à gaz (2) est monté coulissant dans le moufle (10).

FIG 1

FIG 2

EP 0 120 378 B1

FIG 3

FIG 4